# FASCICULE DE BREVET EUROPEEN

(11) **EP 3 140 562 B1**
(45) Date de publication et mention de la délivrance du brevet: **01.07.2020**
(21) Numéro de dépôt: 15719474.7
(22) Date de dépôt: 04.05.2015
(51) Int. Cl.: F16D 28/00

(54) **ACTIONNEUR ÉLECTROMÉCANIQUE À VIS À BILLES POUR UN EMBRAYAGE**
ELEKTROMECHANISCHER STELLANTRIEB MIT KUGELGEWINDETRIEB FÜR EINE KUPPLUNG
BALL SCREW ELECTROMECHANICAL ACTUATOR FOR A CLUTCH

(30) Priorité: 06.05.2014 FR 1454077; 06.11.2014 FR 1460703
(43) Date de publication de la demande: 15.03.2017
(73) Titulaire: NTN-SNR Roulements, 74010 Annecy (FR)
(72) Inventeur: TODESCHINI, Sylvain, 74370 Saint Martin Bellevue (FR); POURROY-SOLARI, Vincent, 74230 Thones (FR)
(74) Mandataire: Alatis
(86) Numéro de dépôt international: PCT/EP2015/059635
(87) Numéro de publication internationale: WO 2015/169710

(56) Documents cités:
- WO-A1-2004/053347
- WO-A1-2011/037023
- DE-A1-102011 079 956
- DE-A1-102013 204 560
- US-A1- 2013 146 417

## Description

### DOMAINE TECHNIQUE DE L'INVENTION

L'invention se rapporte à un actionneur électromécanique plus particulièrement destiné à la commande d'un embrayage sec ou humide, normalement ouvert ou normalement fermé.

### ÉTAT DE LA TECHNIQUE ANTÉRIEURE

Dans le document FR 2 812 048 est décrit un actionneur d'embrayage comportant une vis à billes entraînée en rotation sans translation, et coopérant par l'intermédiaire de billes avec un écrou fixe en rotation, de sorte à entraîner en translation une butée tournante d'embrayage, solidaire de l'écrou. L'entraînement de la vis est obtenu par l'intermédiaire d'une couronne dentée formée sur la vis, engrenant avec une crémaillère déplacée en translation suivant une direction perpendiculaire à l'axe de la vis. Ce dispositif est relativement encombrant et déséquilibré dans la disposition des éléments de transmission des efforts, d'où une usure rapide et une fiabilité aléatoire.

Dans le document WO2013149793 est illustré un actionneur d'embrayage comportant un moteur dont le stator est situé à l'intérieur du rotor qui entraîne en rotation, sans translation, une vis située radialement à l'extérieur du moteur et coopérant par l'intermédiaire de corps roulants avec un écrou mobile en translation par rapport au moteur de manière à entraîner en translation une butée tournante d'embrayage. Cette disposition impose des contraintes importantes dans le dimensionnement du moteur, qui limitent la puissance développée pour un encombrement radial donné.

Dans le document WO04053347 est décrit un actionneur électromécanique pour l'entraînement en translation d'un diaphragme d'embrayage suivant un axe de référence. L'actionneur comporte un moteur électrique dont le rotor tourne perpendiculairement à l'axe de référence et entraîne, par l'intermédiaire d'une vis sans fin, un écrou d'un mécanisme de vis à billes, ce mécanisme de vis à bille comportant une vis fixe, alignée sur l'axe de référence et des billes roulant sur un chemin de roulement de l'écrou et sur un chemin de roulement de la vis. L'écrou, entraîné par le rotor, tourne et progresse en translation par rapport à l'axe de référence.

Dans le document DE102013204560 est décrit un actionneur électromécanique pour l'entraînement en translation d'un diaphragme d'embrayage suivant un axe de référence, cet actionneur comportant un moteur électrique dont le rotor est situé à l'extérieur du stator. Le rotor entraîne en rotation un élément présentant un chemin de roulement tourné radialement vers l'extérieur et entraînant en translation un écrou présentant un chemin de roulement tourné radialement vers l'intérieur.

Dans le document DE102011079956 est décrit un actionneur électromécanique comportant un moteur et une vis à bille, qui n'est pas coaxiale avec le moteur. La vis à bille est entraînée en rotation par le moteur par l'intermédiaire d'un étage réducteur de vitesse à axes parallèles, et coopère avec un écrou mobile en translation.

Dans le document WO11037023 est décrit un actionneur électromécanique pour l'entraînement en translation d'un diaphragme d'embrayage suivant un axe de référence, cet actionneur comportant un moteur entraînant en rotation un écrou coopérant avec une vis à billes. Le moteur et la vis à billes sont coaxiaux et parallèle à l'axe du diaphragme d'embrayage, mais situé à distance de l'axe du diaphragme d'embrayage, une fourchette étant nécessaire pour transmettre le mouvement de l'actionneur à la butée d'embrayage.

Dans le document US2013146417 est décrit un actionneur électromécanique pour l'entraînement en translation d'un diaphragme d'embrayage suivant un axe de référence, cet actionneur comportant un moteur électrique comportant un stator fixe et un rotor tournant par rapport au stator autour de l'axe de référence de l'actionneur, un mécanisme de vis comportant une vis alignée sur l'axe de référence de l'actionneur et présentant au moins un filet tourné radialement vers l'extérieur, un écrou aligné sur l'axe de référence de l'actionneur et présentant au moins un filet tourné radialement vers l'intérieur, l'écrou étant solidaire du rotor, et la vis étant fixe en rotation par rapport au stator et guidée en translation par rapport au stator parallèlement à l'axe de référence de l'actionneur; et une liaison mécanique pour transmettre des efforts axiaux du mécanisme de vis à une butée tournante d'embrayage.

### EXPOSÉ DE L'INVENTION

L'invention vise à remédier aux inconvénients de l'état de la technique et à proposer un actionneur électromécanique compact qui puisse s'insérer facilement dans un embrayage, et présente une bonne fiabilité.

Pour ce faire est proposé, selon un premier aspect de l'invention, un actionneur électromécanique pour l'entraînement en translation d'un diaphragme d'embrayage parallèlement à un axe de référence de l'actionneur, l'actionneur comportant :
- un moteur électrique comportant un stator fixe et un rotor tournant par rapport au stator autour de l'axe de référence de l'actionneur;
- un mécanisme de vis à billes comportant une vis alignée sur l'axe de référence de l'actionneur et présentant au moins un chemin de roulement hélicoïdal tourné radialement vers l'extérieur, un écrou aligné sur l'axe de référence de l'actionneur et présentant au moins un chemin de roulement tourné radialement vers l'intérieur, et des billes roulant sur le chemin de roulement de l'écrou et sur le chemin de roulement de la vis, l'écrou étant solidaire du rotor, et la vis fixe en rotation par rapport au stator et guidé en translation par rapport au stator parallèlement à l'axe de référence de l'actionneur; et
- une liaison mécanique pour transmettre des efforts axiaux de la vis à une butée tournante d'embrayage.

L'actionneur a une forme tubulaire et présente une cavité ouverte à deux extrémités axiales opposées de l'actionneur, ce qui est possible notamment si la vis est tubulaire. Cette cavité permet en pratique d'enfiler l'actionneur sur un arbre d'entrée d'une boîte de transmission disposée en aval de l'embrayage piloté par l'actionneur.

En choisissant de faire tourner l'écrou et translater la vis, on élimine une contrainte dans le dimensionnement du rotor du moteur, ce qui permet, pour un encombrement axial donné, une plus grande puissance.

De préférence, le rotor, qui suivant les modes de réalisation du moteur peut comprendre des aimants permanents et/ou des enroulements, est positionné radialement à l'extérieur de l'écrou. Le cas échéant, l'écrou est positionné au moins partiellement à l'intérieur d'une cavité tubulaire du rotor.

De préférence, le stator, qui comporte des enroulements, est positionné radialement à l'extérieur du rotor. Le moteur est de préférence à entrefer radial, et le rotor est de préférence situé à l'intérieur d'une cavité tubulaire du stator. Il peut s'agir notamment d'un moteur synchrone à aimants permanents rotoriques.

Suivant un mode de réalisation particulièrement avantageux, la liaison mécanique comporte un ressort de précharge en appui contre la vis et apte à travailler dans l'axe de référence de l'actionneur. Ce ressort est destiné à venir solliciter la butée tournante axialement dans une direction de précharge parallèle à l'axe de référence de l'actionneur, et avec une force qui est indépendante du positionnement de la vis. Ce ressort de précharge permet une reprise des jeux fonctionnels entre les composants de l'embrayage et une compensation de l'usure de ces mêmes composants. Le ressort de précharge peut avantageusement être positionné radialement à l'intérieur du chemin de roulement formé sur la vis, ce qui permet une grande compacité de l'ensemble. En particulier, le ressort de précharge peut être positionné au moins partiellement à l'intérieur d'une cavité de la vis.

La vis présente de préférence au moins un relief de guidage coopérant avec au moins un relief de guidage conjugué solidaire du stator pour autoriser une translation de la vis par rapport au stator et interdire une rotation de la vis autour de l'axe de référence de l'actionneur par rapport au stator. Le relief de guidage de la vis est de préférence tourné radialement vers l'intérieur et le relief correspondant solidaire du stator, qui est dans ce cas tourné radialement vers l'extérieur, peut être réalisé sur une pièce de guidage fixe par rapport au stator, de préférence tubulaire, placée à l'intérieur d'un évidement de la vis. Ces reliefs peuvent avantageusement comprendre une ou des cannelures axiales et des nervures conjuguées.

Suivant un mode de réalisation, l'actionneur comporte un tube de guidage fixe par rapport au stator, inséré à l'intérieur de la vis, et sur lequel est formé le relief de guidage conjugué fixe par rapport au stator. Ce tube peut constituer un élément de carter. Le tube de guidage peut avantageusement être disposé radialement à l'extérieur du baladeur et comporter une surface de guidage axial et radial du baladeur. Suivant un mode de réalisation, le tube de guidage comporte une butée limitant un mouvement d'extension du baladeur parallèlement à l'axe de référence.

Suivant un mode de réalisation, la liaison mécanique comporte un baladeur guidé en translation parallèlement à l'axe de référence et fixe en rotation autour de l'axe de référence par rapport à la vis, qui peut être pourvu d'une interface de fixation à la butée tournante, ou qui peut intégrer un des chemins de roulement de la butée tournante. Ce baladeur peut être réalisé sous forme d'un manchon. L'actionneur peut avantageusement inclure un mécanisme anti-retour interposé entre le baladeur la vis, dont la fonction est de mémoriser la position d'équilibre du baladeur par rapport à la vis qui varie dans le temps avec l'usure de l'embrayage, de sorte que la course de la vis par rapport à l'écrou reste constante ou sensiblement constante au cours de la vie de l'embrayage. Pour favoriser l'autocentrage du baladeur, celui-ci peut avantageusement être guidé par rapport à la vis de façon à présenter un ou deux degrés de liberté de rotation autour d'un ou deux axes perpendiculaires à l'axe de référence. Ce baladeur peut intégrer une piste de frottement pour un joint d'étanchéité fixe par rapport au stator, par exemple fixé à un élément de carter. On peut également prévoir un moyen de retenue visant à limiter la course du baladeur et à garantir la cohésion de l'actionneur pendant le stockage, le transport et avant le montage sur l'organe de transmission, afin d'éviter que le baladeur ne se sépare de l'actionneur.

Suivant un mode de réalisation, la vis présente au moins un relief de guidage coopérant avec au moins un relief de guidage conjugué formé sur le baladeur pour autoriser une translation du baladeur par rapport à la vis et interdire une rotation du baladeur autour de l'axe de référence de l'actionneur par rapport à la vis.

De préférence, l'actionneur comporte un palier de guidage en rotation de l'écrou par rapport au stator.

Suivant un mode de réalisation, le palier de guidage présente au moins une bague fixe par rapport au stator et une bague tournante frettée sur l'écrou. Alternativement, le palier peut avoir une piste tournante formée directement sur l'écrou et/ou une piste formée directement sur une partie du carter.

Suivant un mode de réalisation, le palier de guidage comporte au moins une piste fixe par rapport au stator, et une piste tournante, tournant avec l'écrou, la piste tournante étant tournée radialement vers la piste fixe et vers l'intérieur.

L'alternative est également possible: le palier de guidage comporte dans ce cas au moins une piste fixe par rapport au stator, et une piste tournante, tournant avec l'écrou, la piste tournante étant tournée radialement vers la piste fixe et vers l'extérieur.

Dans les deux hypothèses, la piste tournante est située de préférence radialement à l'extérieur du chemin de roulement de l'écrou. Le guidage en rotation de l'écrou s'effectue ainsi sur un grand diamètre. Naturellement, il reste possible de prévoir que la piste tournante soit située radialement à l'intérieur du chemin de roulement de l'écrou, notamment s'il existe des contraintes dimensionnelles particulières à respecter.

Le palier de guidage peut être un palier lisse, mais il s'agit de préférence d'un palier à roulement.

Suivant un mode de réalisation particulièrement avantageux, le palier de guidage présente une piste de palier formée sur l'écrou, d'où une intégration de multiples fonctions dans une même pièce.

L'actionneur comporte de préférence un élément de carter en une ou plusieurs parties, dans lequel est logé le stator, et qui peut le cas échéant servir de support pour le palier de guidage de l'écrou et du rotor. Ce carter peut être pourvu d'une interface de fixation à un carter de boîte de transmission, comprenant par exemple un flasque et des trous d'insertion de vis de fixation.

L'actionneur comporte en outre de préférence une butée tournante d'embrayage, qui est de préférence à roulement et présente deux chemins de roulement annulaires et des corps roulants au contact des deux chemins de roulement pour permettre une rotation relative entre les deux chemins de roulement. On peut prévoir que la butée tournante soit mobile radialement par rapport à l'axe de référence de l'actionneur. A cet effet, on peut intégrer à la liaison mécanique un ressort de maintien et d'autocentrage de la butée tournante exerçant un effort axial sur la butée, pour plaquer la butée tournante contre une surface de préférence plane et perpendiculaire à l'axe de référence, ce qui permet à la butée tournante une mobilité radiale par rapport à l'axe de référence. Le ressort de maintien peut notamment plaquer la butée tournante contre une surface plane du baladeur, avec une direction d'appui opposée au ressort de précharge. Le ressort d'autocentrage est de préférence en appui radial sur une portée radiale, de préférence cylindrique, de la collerette.

Pour éviter une expansion des languettes de la collerette on peut prévoir une bague conique de maintien, interposée entre le ressort de précharge et le ressort d'autocentrage.

De préférence, l'écrou comporte une butée, constituée de préférence par un segment d'arrêt, interférant avec la trajectoire de la vis et limitant un mouvement axial de la vis dans un sens de la rétractation. Cette disposition de butée entre l'écrou et la vis est préférable à un blocage, également possible, de la vis par rapport au carter de l'actionneur, car il permet limiter les efforts entre les billes et les filets du mécanisme de vis à billes.

Suivant un autre aspect de l'invention, celle-ci a trait à une chaîne cinématique de transmission comportant un arbre d'entrée de boîte de transmission relié à un composant d'un embrayage, et un actionneur d'embrayage tel que décrit précédemment, enfilé sur l'arbre d'entrée et apte à déplacer un diaphragme de l'embrayage.

### BRÈVE DESCRIPTION DES FIGURES

D'autres caractéristiques et avantages de l'invention ressortiront à la lecture de la description qui suit, en référence aux figures annexées, qui illustre:
- la figure 1, une vue en coupe axiale d'un actionneur suivant un mode de réalisation de l'invention, pourvu d'une vis positionnée dans une première position de fin de course, et d'un baladeur dans une position rétractée;
- la figure 2, une vue en coupe axiale de l'actionneur de la figure 1, la vis étant positionnée dans la première position de fin de course, et le baladeur dans une position déployée;
- la figure 3, une vue en coupe axiale de l'actionneur de la figure 1, la vis étant positionnée dans une deuxième position de fin de course, et le baladeur dans la position rétractée;
- la figure 4, une vue en coupe axiale de l'actionneur de la figure 1, la vis étant positionnée dans la deuxième position de fin de course, et le baladeur dans la position déployée;
- la figure 5, une vue en coupe transversale suivant un plan de coupe V illustré sur la figure 3;
- la figure 6, une vue en coupe transversale suivant un plan de coupe VI illustré sur la figure 2;
- la figure 7, une vue en coupe axiale d'un actionneur selon un deuxième mode de réalisation de l'invention, la vis étant positionnée dans une deuxième position de fin de course, et le baladeur dans une position déployée;
- la figure 8, un détail de la figure 7;
- la figure 9, une vue en coupe axiale d'un actionneur selon un troisième mode de réalisation de l'invention, la vis étant positionnée dans une deuxième position de fin de course, et le baladeur dans une position déployée;
- la figure 10 un détail d'une coupe axiale d'un actionneur selon un quatrième mode de réalisation de l'invention, la vis étant positionnée dans une position intermédiaire entre deux positions de fin de course, et le baladeur dans la position déployée;
- la figure 11 une vue en coupe axiale d'un actionneur selon un cinquième mode de réalisation de l'invention, la vis étant positionnée dans la première position de fin de course, et le baladeur dans la position déployée.

Pour plus de clarté, les éléments identiques ou similaires sont repérés par des signes de référence identiques sur l'ensemble des figures.

### DESCRIPTION DÉTAILLÉE DE MODES DE RÉALISATION

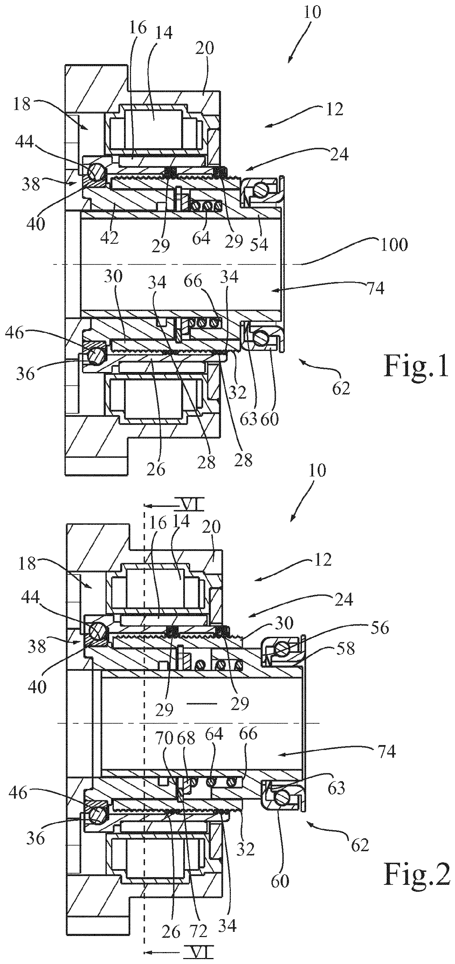

Sur les figures **1** à **6** est illustré un actionneur électromécanique **10** plus particulièrement adapté à l'entraînement en translation d'un diaphragme d'embrayage (non illustré) parallèlement à un axe géométrique de référence **100** de l'actionneur, confondu avec un axe de rotation de l'embrayage. L'actionneur comporte un moteur électrique **12** à entrefer radial, comportant un stator extérieur **14** et un rotor **16** tournant à l'intérieur du stator autour de l'axe de référence de l'actionneur. Le moteur **12** peut par exemple être un moteur synchrone à aimants permanents présentant des enroulements statoriques et un rotor constitué d'aimants permanents. Le moteur **12** est logé dans un logement cylindrique **18** d'un élément de carter **20**, ce dernier comportant un flasque **21** pourvu de trous **22** pour le passage de vis de fixation (non illustrées) à un carter de la boîte de vitesse.

Un mécanisme de vis à billes **24** est disposé à l'intérieur du rotor **16**, aligné sur l'axe de référence **100** de l'actionneur. Ce mécanisme **24** comporte un écrou **26** solidaire du rotor **16** et présentant au moins un, et de préférence deux, chemins de roulement **28** hélicoïdaux tournés radialement vers l'intérieur et équipés chacun d'un recirculateur de billes **29,** une vis **30** coaxiale présentant au moins un chemin de roulement hélicoïdal **32** tourné radialement vers l'extérieur et des billes **34** circulant sur les chemins de roulement **32, 28** de la vis **30** et de l'écrou **26**.

Sur l'écrou **26** est également formé un chemin de roulement annulaire tournant **36** d'un palier de guidage **38** à roulement à contact oblique. Ce palier de guidage **38** comporte en outre une bague intérieure fixe **40** frettée sur un tube de guidage **42** solidaire de l'élément de carter **20** et sur laquelle est formé un chemin de roulement fixe **44** situé en regard du chemin de roulement annulaire **36** de l'écrou, des billes **46** circulant sur les chemins de roulement **36**, **44** de manière à guider l'écrou **26** en rotation par rapport au carter **20** et au stator **14** et à s'opposer à la translation de l'écrou **26** par rapport au carter **20** et au stator **14**.

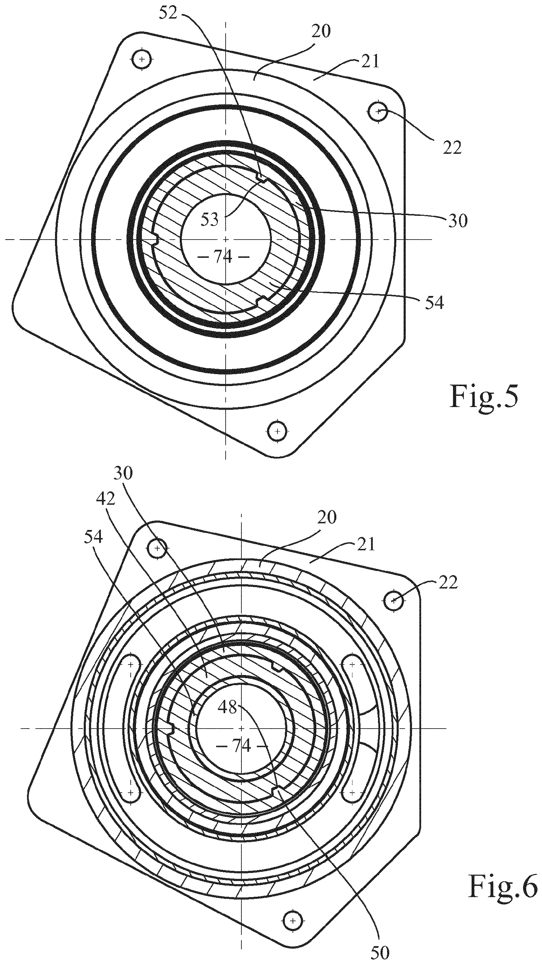

Sur le tube de guidage **42** sont formées des cannelures **48** (visibles sur la figure **6**) qui s'étendent parallèlement à l'axe de référence de l'actionneur et coopèrent avec des nervures conjuguées **50** formées sur la vis **30**, permettant un guidage en translation sans rotation de la vis **30** par rapport au carter **20** et au stator **14**.

La vis **30** comporte un deuxième jeu de nervures **52**, illustré sur la figure **5**, qui s'étendent axialement et coopèrent avec des cannelures conjuguées **53** formées sur un manchon baladeur **54** qui présente un épaulement plan **56** perpendiculaire à l'axe de référence **100**, et une portée cylindrique **58** permettant loger une bague extérieure **60** d'une butée tournante d'embrayage **62** destinée à venir actionner un diaphragme d'embrayage (non représenté). Dans ce mode de réalisation, la bague extérieure **60** présente un diamètre intérieur légèrement plus grand que celui de la portée cylindrique, autorisant ainsi un jeu fonctionnel radial. Une rondelle de ressort conique **63** maintient la bague extérieure en appui axial contre l'épaulement **56**, tout en préservant cette liberté de mouvement radial de la bague, qui permet un autocentrage ce la butée tournante **62**. Un ressort hélicoïdal de précharge **64** est positionné radialement à l'intérieur du chemin de roulement **32** formé sur la vis **30** et de préférence au moins partiellement à l'intérieur d'une cavité de la vis **30**, en appui par une extrémité contre un épaulement **66** du manchon baladeur et par une autre extrémité, par l'intermédiaire d'une rondelle d'appui **68**, à un jonc d'arrêt **70** glissé dans une gorge annulaire **72** de la vis **30**, de manière à rappeler le manchon baladeur **54** dans une direction axiale de précharge parallèle à l'axe de référence de l'actionneur.

De manière remarquable, tous les composants de l'actionneur **10** sont tubulaires et l'actionneur délimite une cavité tubulaire **74** aligné sur l'axe de référence **100** de l'actionneur et ouvert à ses deux extrémités axiales, permettant d'enfiler l'actionneur **10** sur un arbre d'entrée d'une boîte de transmission.

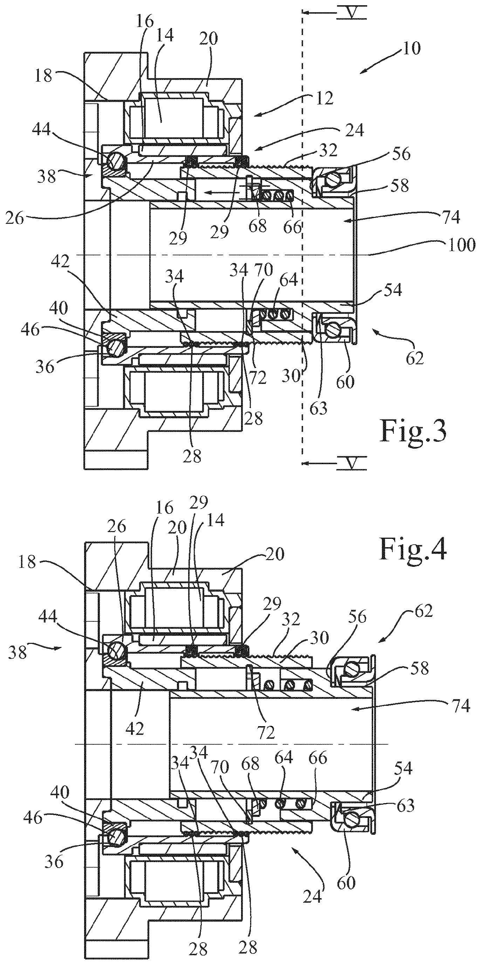

L'actionneur **10** fonctionne de la manière suivante: l'alimentation électrique du moteur **12** permet de faire tourner le rotor **16** et l'écrou **26** et d'entraîner la vis **30** en translation parallèlement à l'axe de référence **100** de l'actionneur, entre une première position de fin de course illustrée sur les figures **1** et **2**, et une deuxième position de fin de course illustrée sur les figures **3** et **4**. Par ailleurs, et quelle que soit la position de la vis **30** sur sa course, le manchon baladeur **54** est mobile par rapport à cette dernière, parallèlement à l'axe de référence **100** de l'actionneur, entre une position rétractée illustrée sur les figures **1** et **3**, et une position déployée illustrée sur les figures **2** et **4**. Le ressort de précharge **64** sollicite le baladeur **54** vers la position déployée et cette sollicitation est équilibrée par la sollicitation du diaphragme sur la butée tournante. Le ressort de précharge **64** permet ainsi de compenser les jeux dimensionnels et fonctionnels et les usures de pièces dans l'embrayage, le moteur assurant le déplacement axial de la vis et l'effort sur le baladeur, la butée tournante et le diaphragme, en vue de l'actionnement de l'embrayage, qui peut être de type quelconque, normalement ouvert ou normalement fermé, sec ou humide, simple ou double. Un arrêt en translation vers la droite sur les figures **1** à **4** est dans le cas présent réalisé par l'appui sur le diaphragme du mécanisme d'embrayage, via la butée **62**, le baladeur **54**, le ressort **64**, la rondelle **68**, le jonc **70**, la vis à bille **30** et les billes **28**.

Le mécanisme de vis à bille **24** est réversible, se qui impose de maintenir le moteur sous tension pour maintenir un effort dans la position s'opposant aux ressorts disposés dans le mécanisme d'embrayage. Toutefois, le rendement du mécanisme de vis à bille **24** est très élevé dans le sens de la transformation d'un couple moteur du moteur en translation de la vis **30**, et très faible en sens inverse, de sorte que l'énergie électrique de maintien nécessaire est très faible.

Naturellement, diverses variations sont possibles. En particulier, il est possible de prévoir que le chemin de roulement du palier de guidage soit formé sur une bague de roulement rapportée sur l'écrou. Le tube de guidage peut être formé d'une pièce avec l'élément de carter.

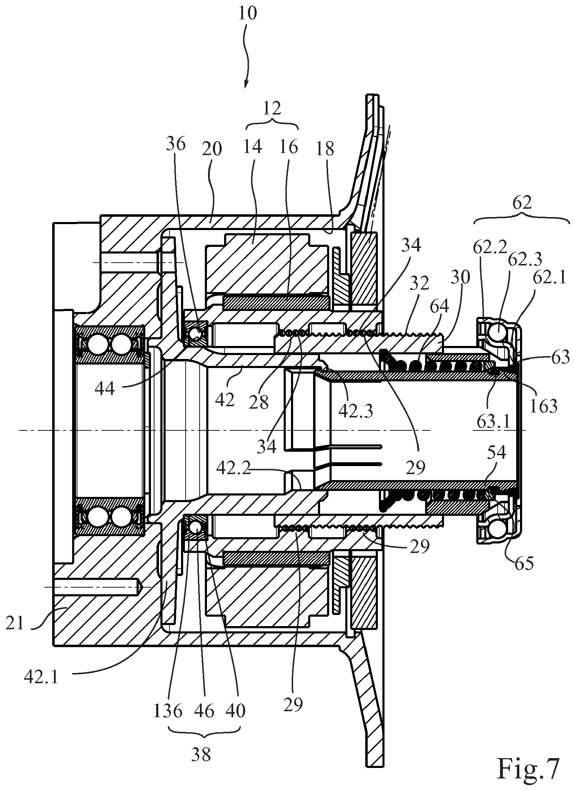

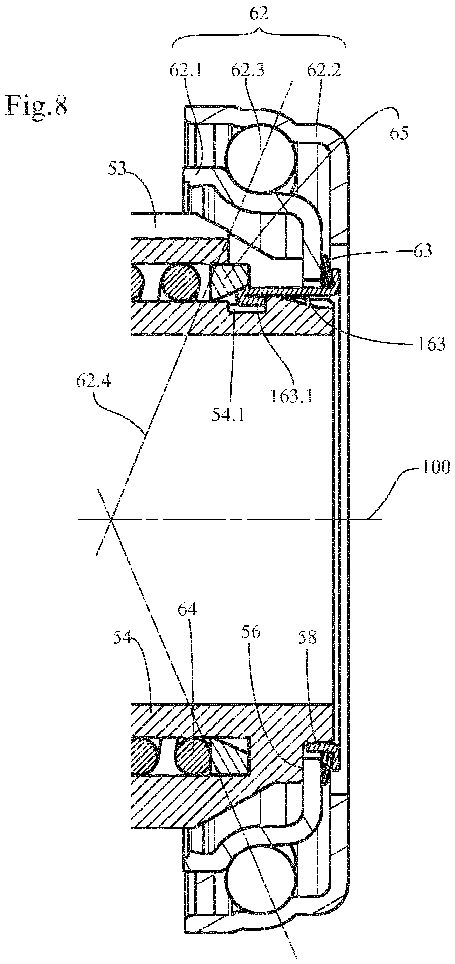

On a illustré sur les figures **7** et **8** un actionneur électromécanique **10** suivant un deuxième mode de réalisation, très proche dans sa structure et son fonctionnement de l'actionneur des figures **1** à **6**. On se référera utilement à la description précédente, pour la description détaillée des composants identiques ou similaires, repérés par des mêmes signes de référence dans les deux modes de réalisation. L'exposé ci-après se focalisera donc sur les différences.

On constatera en premier lieu que le tube de guidage **42** forme une seule pièce avec un flasque **42.1** de fixation à un corps de carter du moteur. Le chemin de roulement tournant **36** est formé sur une bague extérieure tournante de roulement **136** frettée dans l'écrou **26**. Trois ergots **42.3** disposés à 120° autour de l'axe géométrique de référence **100** forment une butée limitant la course du manchon baladeur **54** dans le sens de son déploiement. Le manchon baladeur **54** est guidé axialement à l'intérieur d'un chambrage **42.2** réalisé dans le tube de guidage **42**. Ce guidage vient compléter le guidage axial existant par ailleurs entre le baladeur **54** et la vis **30**, ce qui permet une bonne précision du centrage et de l'alignement du baladeur **54** par rapport à l'axe de référence **100** dans toutes les positions de l'actionneur **10**.

Comme illustré en détail sur la figure **8**, la butée tournante **62** est positionnée au niveau d'une portée cylindrique **58** du manchon baladeur **54**. La butée **62** est constituée par un roulement à billes à contact oblique qui comporte une bague intérieure **62.1** en appui axial contre une face d'appui **56** du manchon baladeur **54**, une bague extérieure **62.2** formant un épaulement d'appui contre le diaphragme d'embrayage, et des billes **62.3** ayant des points de contact avec les bagues situés sur un cône de contact **62.4** dont le sommet est situé sur l'axe de référence **100** et pointe dans la direction de rétractation de l'actionneur **10**. La bague intérieure **62.1** de la butée tournante **62** présente un diamètre intérieur plus grand que celui de la portée cylindrique **58** du baladeur **54**. On prévoit une rondelle élastique d'autocentrage **63** assurant une liberté de positionnement radial de la bague intérieure **62.1** par rapport au baladeur **54** et à l'axe de référence **100**. La rondelle élastique d'autocentrage **63** est maintenue par une collerette **163** qui présente des languettes élastiques **163.1** réparties sur sa circonférence (dans l'exemple, six languettes), venant s'agrafer dans des encoches **54.1** prévues à cet effet dans le baladeur **54.** Pour éviter une éjection de la collerette **163**, on peut prévoir une interaction entre le ressort de précharge **64** et les languettes **163.1** de la collerette, par l'intermédiaire d'une bague conique **65**. Ainsi les languettes **163.1** sont-elles sollicitées par le ressort de précharge **64** et la bague conique **65**, de manière à rester dans les encoches **54.1**.

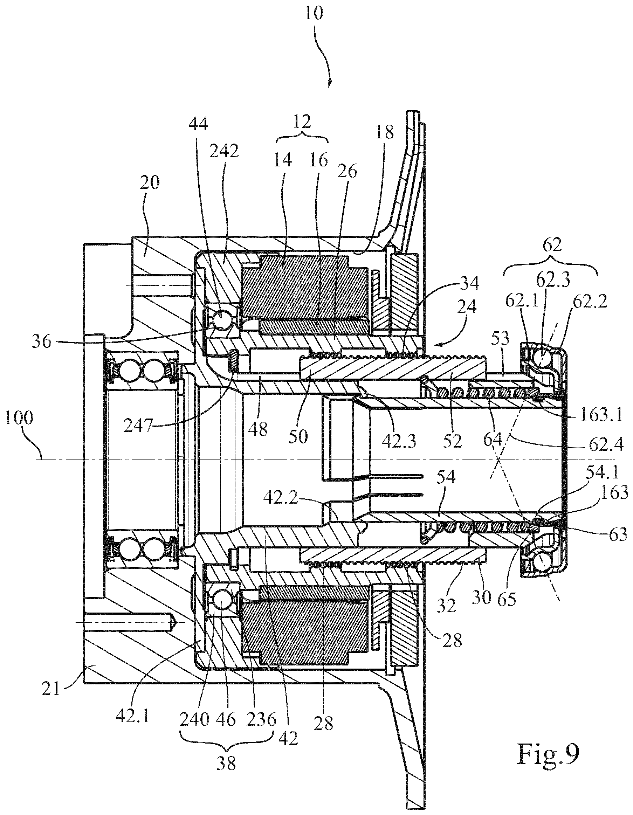

Sur la figure **9** est illustré un actionneur électromécanique selon un autre mode de réalisation de l'invention, également très proche dans sa structure et son fonctionnement des modes de réalisation précédents, de sorte que l'on se référera utilement pour la description détaillée des composants identiques ou similaires, repérés par des mêmes signes de référence dans les deux modes de réalisation, à la description précédentes. L'exposé ci-après se focalisera donc sur les différences.

On prévoit suivant ce mode de réalisation une entretoise **242** disposée entre le tube de guidage **42** et le stator **14** du moteur, permettant un centrage radial et axial des différents composants fixes. Le guidage en rotation de l'écrou **26** par rapport au stator **14** est réalisé par un palier à roulement **38** comportant une bague fixe extérieure **240** frettée dans l'entretoise **242**, une bague tournante intérieure **236** frettée sur l'écrou et des corps roulants, ici des billes **46**, roulant sur un chemin de roulement fixe **44** réalisé dans la bague extérieure **240** et un chemin de roulement tournant **36** réalisé sur la bague intérieure **236**. Le diamètre primitif du palier de guidage **38** est ici plus grand que le diamètre extérieur de la vis **30**.

On prévoit également un segment d'arrêt **247** monté sur l'écrou **26** et faisant saillie radialement vers l'intérieur pour former une butée axiale limitant le mouvement de la vis **30** dans le sens de la rétractation.

En variante non illustrée, on peut le cas échéant profiter de l'entretoise **142** pour y former directement le chemin de roulement fixe **44** de guidage de l'écrou. On peut par ailleurs former le chemin de roulement tournant **36** directement sur l'écrou **26**.

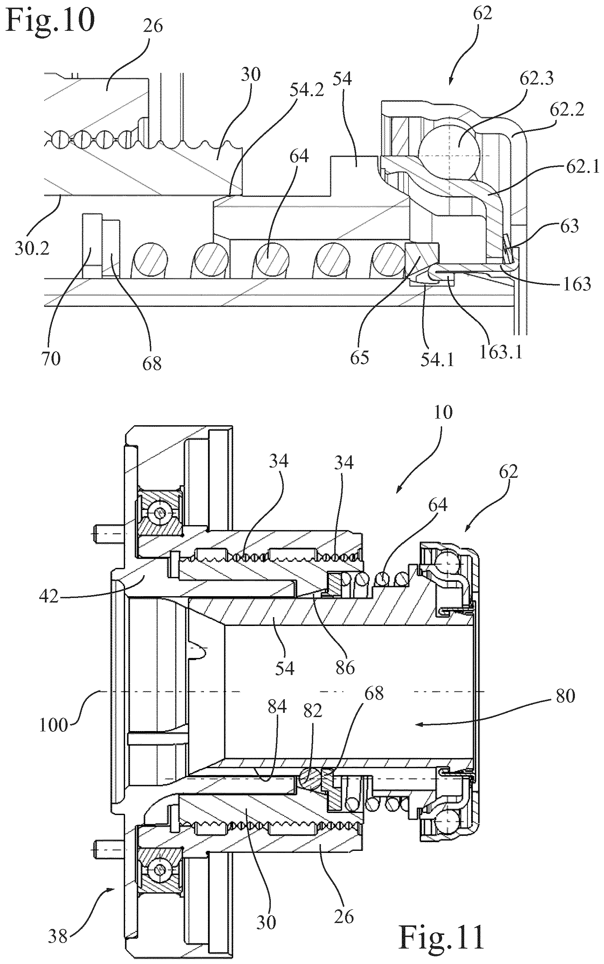

Sur la figure **10** est illustré un détail d'un actionneur électromécanique selon un autre mode de réalisation de l'invention, qui diffère du mode de réalisation des figures **7** et **8** par la liaison glissière entre le manchon baladeur **54** et la vis **30**. On prévoit à cet effet un jonc torique **54.2**, qui peut être formé par un renflement du manchon baladeur **54** ou par une pièce rapportée, et qui glisse dans un chambrage **30.2** de la vis, tout en permettant un pivotement relatif de faible amplitude entre le baladeur **54** et la vis **30** à la manière d'une rotule, de manière à autoriser un désalignement entre l'axe de la vis **30** et l'axe de rotation de la butée tournante **62** et un autocentrage du baladeur **54** portant la butée tournante **62**. Le jonc torique **54.2** confère au baladeur **54** deux degrés de liberté par rapport à deux axes perpendiculaires à l'axe de référence **100**. Par ailleurs, on prévoit, dans ce mode de réalisation comme dans les précédents, des cannelures pour interdire la rotation du baladeur **54** autour de l'axe de référence **100**.

Sur la figure **11** est illustré un actionneur électromécanique selon un autre mode de réalisation de l'invention, qui diffère des précédents par l'adjonction d'un mécanisme anti-retour **80** interposé entre le manchon baladeur **54** et la vis **30**. Le mécanisme anti-retour **80** comporte ici un ou plusieurs corps roulants **82** qui présentent chacun trois zones de contact, à savoir une première zone de contact avec une piste de roulement **84** formée sur le manchon baladeur **54**, une deuxième avec une rampe **86** formée sur la vis **30** et une troisième avec une rondelle d'appui **68**, qui sert d'appui pour le ressort de précharge **64**. Le ressort de précharge **64** tend à maintenir le ou les corps roulants **82** en a contact avec la rondelle d'appui **68**, avec la rampe **86** et avec la piste de roulement **84** formée sur le manchon baladeur **54**. Lorsque, du fait de l'usure de pièce du mécanisme d'embrayage, l'effort appliqué par l'embrayage sur la butée tournante **62** diminue, le ressort de précharge **64** tend à écarter l'un de l'autre le manchon baladeur **64** et la vis **30**, c'est-à-dire à entraîner le manchon baladeur **64** vers la droite sur la figure **11** par rapport à la vis **30**. Lorsqu'une nouvelle position d'équilibre est atteinte, le mécanisme anti-retour **80** empêche tout mouvement de rétractation du manchon baladeur **64** dans la vis **30**, du fait du coincement du ou des corps roulant **82**, chacun entre la piste de roulement **84** et la rampe **86** qui lui sont associées. On fait ainsi en sorte que, malgré l'usure des pièces de l'embrayage, la course que doit couvrir la vis **30** par rapport à l'écrou **26** entraîné par le moteur **12** pour actionner l'embrayage reste sensiblement constant. Le ou les corps roulants **82** peuvent être des billes ou des rouleaux.

La ou les pistes de roulement **84** associées peuvent être concaves, convexes ou planes. Naturellement, le mécanisme anti-retour **80** peut être adapté à tous les modes de réalisation précédents. Il peut par ailleurs être réalisé par tout moyen approprié, à cliquet ou à came, en utilisant le ressort de précharge **64** ou un ressort spécifique indépendant.

D'autres variations sont possibles. En particulier, la forme et le nombre de chemins de roulement hélicoïdaux sur la vis et de chemins de roulement correspondants sur l'écrou peuvent être choisis librement par l'homme du métier en fonction des contraintes de dimensionnement, et notamment de la puissance à transmettre. Le ressort de précharge peut avoir une structure quelconque, par exemple à vague, en rondelle élastique conique ou ondulée. Le guidage de la vis en translation par rapport au carter peut être réalisé par tout moyen approprié. Les recirculateurs de billes peuvent être positionnés sur la vis. Le baladeur n'est pas nécessairement un manchon mais peut présenter toute forme appropriée. Le baladeur peut ne former qu'une pièce avec l'une des bagues de la butée tournante. La butée tournante peut être de tout type approprié, de préférence à roulement, les corps roulants pouvant être des rouleaux, et dans ce cas de préférence des rouleaux coniques, ou des billes, la butée étant dans cette hypothèse de préférence à contact oblique, pour supporter les charges axiales. On peut également envisager des paliers lisses pour remplacer l'un ou l'autre des paliers à roulement. Le logement **18** du moteur **12** peut avoir toute forme de révolution appropriée.

## Revendications

1. Actionneur électromécanique (10) pour l'entraînement en translation d'un diaphragme d'embrayage parallèlement à un axe de référence (100) de l'actionneur, l'actionneur (10) comportant :
- un moteur électrique (12) comportant un stator fixe (14) et un rotor (16) tournant par rapport au stator (14) autour de l'axe de référence de l'actionneur;
- un mécanisme de vis à billes (24) comportant une vis (30) alignée sur l'axe de référence (100) de l'actionneur et présentant au moins un chemin de roulement hélicoïdal (32) tourné radialement vers l'extérieur, un écrou (26) aligné sur l'axe de référence (100) de l'actionneur et présentant au moins un chemin de roulement (28) tourné radialement vers l'intérieur, et des billes (34) roulant sur le chemin de roulement (28) de l'écrou et sur le chemin de roulement (32) de la vis;
- une liaison mécanique (64, 54) pour transmettre des efforts axiaux du mécanisme de vis à billes (24) à une butée tournante (62) d'embrayage,
**caractérisé en ce que** l'écrou (26) est solidaire du rotor (16), et la vis est (30) fixe en rotation par rapport au stator (14) et guidé en translation par rapport au stator (14) parallèlement à l'axe de référence (100) de l'actionneur, l'actionneur étant de forme tubulaire et présentant une cavité (74) ouverte à deux extrémités axiales opposées de l'actionneur.

2. Actionneur selon la revendication 1, **caractérisé en ce que** le rotor (16) est positionné radialement à l'extérieur de l'écrou (26), le stator (14) étant de préférence positionné radialement à l'extérieur du rotor (16).

3. Actionneur selon l'une quelconque des revendications précédentes, **caractérisé en ce que** la liaison mécanique comporte un ressort de précharge (64) en appui direct ou indirect contre la vis (30), le ressort de précharge (64) étant préférentiellement positionné radialement à l'intérieur du chemin de roulement (32) formé sur la vis, préférentiellement au moins partiellement à l'intérieur d'une cavité de la vis (30).

4. Actionneur selon l'une quelconque des revendications précédentes, **caractérisé en ce que** la liaison mécanique comporte un baladeur (54) guidé en translation parallèlement à l'axe de référence (100) par rapport à la vis (30) et fixe en rotation autour de l'axe de référence (100) par rapport à la vis (30).

5. Actionneur selon la revendication 4, **caractérisé en ce qu'**il comporte en outre un mécanisme anti-retour (80) interposé entre le baladeur (54) la vis (30).

6. Actionneur selon l'une quelconque des revendications 4 à 5, **caractérisé en ce que** la vis (30) présente au moins un relief de guidage (52) coopérant avec au moins un relief de guidage conjugué (53) formé sur le baladeur (54) pour autoriser une translation du baladeur (54) par rapport à la vis (30) et interdire une rotation du baladeur (54) autour de l'axe de référence (100) de l'actionneur par rapport à la vis (30).

7. Actionneur selon l'une quelconque des revendications précédentes, **caractérisé en ce que** la vis (30) présente au moins un relief de guidage (50) coopérant avec au moins un relief de guidage conjugué (48) fixe par rapport au stator (14) pour autoriser une translation de la vis (30) par rapport au stator (14) et interdire une rotation de la vis (30) autour de l'axe de référence (100) de l'actionneur par rapport au stator (14)l'actionneur comportant de préférence un tube de guidage (42) fixe par rapport au stator, inséré à l'intérieur de la vis (30), et sur lequel est formé le relief de guidage conjugué (48) fixe par rapport au stator (14).

8. Actionneur selon l'une quelconque des revendications précédentes, **caractérisé en ce qu'**il comporte un palier (38) de guidage en rotation de l'écrou (26) par rapport au stator (14), préférentiellement un palier à roulement, le palier de guidage (38) présentant de préférence une piste de palier (36) formée sur l'écrou (26), ou au moins une bague (40, 240) fixe par rapport au stator et une bague tournante (136, 236) frettée sur l'écrou (26).

9. Actionneur selon l'une quelconque des revendications précédentes, **caractérisé en ce qu'**il comporte en outre une butée tournante d'embrayage (62) liée à la vis (30) par l'intermédiaire de la liaison mécanique (54, 64).

10. Actionneur selon la revendication 9, **caractérisé en ce que** la butée tournante (62) est mobile radialement par rapport à l'axe de référence (100) de l'actionneur.

11. Actionneur selon la revendication 10, **caractérisé en ce que** l'actionneur comporte un ressort d'autocentrage (63) de la butée tournante (62) plaquant la butée tournante (62) contre une face d'appui (56) perpendiculaire à l'axe de référence (100).

12. Actionneur selon la revendication 11 et l'une des revendications 4 à 6, **caractérisé en ce que** le ressort d'autocentrage (63) est en appui radial sur une collerette (163).

13. Actionneur selon la revendication 12 et la revendication 3, **caractérisé en ce que** la collerette (163) est maintenue par une bague conique interposée entre le ressort de précharge (64) et la collerette (163).

14. Actionneur selon l'une quelconque des revendications précédentes, **caractérisé en ce que** l'écrou (26) comporte une butée (247), constituée de préférence par un segment d'arrêt (247), interférant avec la trajectoire de la vis (30) et limitant un mouvement axial de la vis (30) dans un sens de la rétractation.

## Patentansprüche

1. Elektromechanisches Stellglied (10) zum translatorischen Antrieb einer Kupplungsmembran parallel zu einer Bezugsachse (100) des Stellglieds, wobei das Stellglied (10) folgendes umfasst:
- einen Elektromotor (12), der einen festen Stator (14) umfasst und einen Rotor (16), der sich relativ zum Stator (14) um die Bezugsachse des Stellglieds dreht;
- einen Kugelrollspindelmechanismus (24) mit einer Spindel (30), die auf die Bezugsachse (100) des Stellglieds ausgerichtet ist und mindestens eine radial nach außen gerichtete spiralförmige Laufbahn (32) aufweist, eine auf die Bezugsachse (100) des Stellglieds ausgerichtete Mutter (26), die mindestens eine radial nach innen gerichtete Laufbahn (28) aufweist, und Kugeln (34), die auf der Laufbahn (28) der Mutter und der Laufbahn (32) der Spindel rollen;
- eine mechanische Verbindung (64, 54) zur Übertragung der Axialkräfte des Kugelrollspindelmechanismus (24) auf ein drehendes Kupplungslager (62),
**dadurch gekennzeichnet, dass** die Mutter (26) fest mit dem Rotor (16) verbunden ist, und die Spindel (30) relativ zum Stator (14) drehfest ist und parallel zur Bezugsachse (100) des Stellgliedes translatorisch geführt wird, wobei das Stellglied rohrförmig ist und einen Hohlraum (74) aufweist, der an zwei gegenüberliegenden axialen Enden des Stellgliedes offen ist.

2. Stellglied nach Anspruch 1, **dadurch gekennzeichnet, dass** der Rotor (16) radial außerhalb der Mutter (26) positioniert ist, wobei der Stator (14) vorzugsweise radial außerhalb des Rotors (16) positioniert ist.

3. Stellglied nach einem der vorhergehenden Ansprüche, **dadurch gekennzeichnet, dass** die mechanische Verbindung eine Vorspannfeder (64) umfasst, die direkt oder indirekt an der Spindel (30) anliegt, wobei die Vorspannfeder (64) vorzugsweise radial im Innern der auf der Spindel ausgebildeten Laufbahn (32), vorzugsweise zumindest teilweise im Innern eines Hohlraums der Spindel (30), positioniert ist.

4. Stellglied nach einem der vorhergehenden Ansprüche, **dadurch gekennzeichnet, dass** die mechanische Verbindung ein Schiebeelement (54) umfasst, das relativ zur Spindel (30) parallel zur Bezugsachse (100) translatorisch und drehfest um die Bezugsachse (100) geführt wird.

5. Stellglied nach Anspruch 4, **dadurch gekennzeichnet, dass** es des Weiteren einen Rückschlagmechanismus (80) umfasst, der zwischen dem Schiebeelement (54) und der Spindel (30) angeordnet ist.

6. Stellglied nach einem der Ansprüche 4 bis 5, **dadurch gekennzeichnet, dass** die Spindel (30) mindestens ein Führungsrelief (52) aufweist, das mit mindestens einem, am Schiebeelement (54) ausgebildeten zusammenpassenden Führungsrelief (53) zusammenwirkt, um eine Translation des Schiebeelements (54) relativ zur Spindel (30) zu ermöglichen und eine Drehung des Schiebeelements (54) um die Bezugsachse (100) des Stellglieds relativ zur Spindel (30) zu verhindern.

7. Stellglied nach einem der vorhergehenden Ansprüche, **dadurch gekennzeichnet, dass** die Spindel (30) mindestens ein Führungsrelief (50) aufweist, das mit mindestens einem relativ zum Stator (14) feststehenden zusammenpassenden Führungsrelief (48) zusammenwirkt, um eine Translation der Spindel (30) relativ zum Stator (14) zu ermöglichen und eine Drehung der Spindel (30) um die Bezugsachse (100) des Stellglieds relativ zum Stator (14) zu verhindern, wobei das Stellglied vorzugsweise ein relativ zum Stator feststehendes Führungsrohr (42) umfasst, das in das Innere der Spindel (30) eingeführt wird und auf dem das relativ zum Stator (14) feststehende zusammenpassende Führungsrelief (48) ausgebildet ist.

8. Stellglied nach einem der vorhergehenden Ansprüche, **dadurch gekennzeichnet, dass** es ein Lager (38) zur drehenden Führung der Mutter (26) relativ zum Stator (14) umfasst, vorzugsweise ein Wälzlager, wobei das Führungslager (38) vorzugsweise eine auf der Mutter (26) ausgebildete Lagerlaufbahn (36) aufweist, oder mindestens einen relativ zum Stator feststehenden Ring (40, 240) und einen auf die Mutter (26) aufgeschrumpften Drehring (136, 236) .

9. Stellglied nach einem der vorhergehenden Ansprüche, **dadurch gekennzeichnet, dass** es ferner ein drehendes Kupplungslager (62) umfasst, das mit der Spindel (30) über die mechanische Verbindung (54, 64) verbunden ist.

10. Stellglied nach Anspruch 9, **dadurch gekennzeichnet, dass** das drehende Lager (62) relativ zur Bezugsachse (100) des Stellglieds radial beweglich ist.

11. Stellglied nach Anspruch 10, **dadurch gekennzeichnet, dass** es eine Feder (63) zur Selbstzentrierung des drehenden Lagers (62) umfasst, die das drehende Lager (62) senkrecht zur Bezugsachse (100) gegen eine Auflagefläche (56) drückt.

12. Stellglied nach Anspruch 11 und einem der Ansprüche 4 bis 6, **dadurch gekennzeichnet, dass** die Selbstzentrierungsfeder (63) radial an einem Flansch (163) anliegt.

13. Stellglied nach Anspruch 12 und nach Anspruch 3, **dadurch gekennzeichnet, dass** der Flansch (163) durch einen konischen Ring gehalten wird, der zwischen der Vorspannfeder (64) und dem Flansch (163) angeordnet ist.

14. Stellglied nach einem der vorhergehenden Ansprüche, **dadurch gekennzeichnet, dass** die Mutter (26) einen Anschlag (247) umfasst, der vorzugsweise aus einem Sicherungssegment (247) besteht, das auf der Bewegungsbahn der Spindel (30) liegt und eine axiale Bewegung der Spindel (30) in einer Rückzugsrichtung abgrenzt.

## Claims

1. An electromechanical actuator (10) for driving in translation a clutch diaphragm in parallel with a reference axis (100) of the actuator, the actuator (10) comprising:
- an electric motor (12) having a stationary stator (14) and a rotor (16) which rotates relative to the stator (14) about the reference axis of the actuator;
- a ball screw mechanism (24) comprising a screw (30) aligned with the reference axis (100) of the actuator and having at least one helical roller track (32) facing radially outward, a nut (26) aligned with the reference axis (100) of the actuator and having at least one roller track (28) facing radially inward, and balls (34) which roll on the nut roller track (28) and on the screw roller track (32);
- a mechanical connection (64, 54) for transmitting axial forces from the ball screw mechanism (24) to a rotary thrust bearing (62),
**characterized in that** the nut (26) is integral with the rotor (16), and the screw (30) is stationary in rotation relative to the stator (14) and guided in translation relative to the stator (14) in parallel with the reference axis (100) of the actuator, the actuator being tubular in shape and having a cavity (74) open at two opposite axial ends of the actuator.

2. An actuator according to claim 1, **characterized in that** the rotor (16) is positioned radially outside the nut (26), the stator (14) preferably being positioned radially outside the rotor (16).

3. An actuator according to any one of the preceding claims, **characterized in that** the mechanical connection comprises a preload spring (64) directly or indirectly bearing against the screw (30), the preload spring (64) preferably being positioned radially inside the roller track (32) formed on the screw, preferably at least partially inside a cavity of the screw (30).

4. An actuator according to any one of the preceding claims, **characterized in that** the mechanical connection comprises a sliding gear (54) guided in translation in parallel with the reference axis (100) relative to the screw (30) and stationary in rotation about the reference axis (100) relative to the screw (30).

5. An actuator according to claim 4, **characterized in that** it further comprises a non-return mechanism (80) interposed between the sliding gear (54) and the screw (30) .

6. An actuator according to any one of claims 4 to 5, **characterized in that** the screw (30) has at least one guide relief (52) cooperating with at least one conjugate guide relief (53) formed on the sliding gear (54) to allow a translation of the sliding gear (54) relative to the screw (30) and to prevent a rotation of the sliding gear (54) about the reference axis (100) of the actuator relative to the screw (30).

7. An actuator according to any one of the preceding claims, **characterized in that** the screw (30) has at least one guide relief (50) cooperating with at least one conjugate guide relief (48) stationary relative to the stator (14) in order to allow a translation of the screw (30) relative to the stator (14) and to prohibit a rotation of the screw (30) about the reference axis (100) of the actuator relative to the stator (14), the actuator preferably comprising a guide tube (42) stationary relative to the stator, inserted inside the screw (30), and on which the conjugate guide relief (48) stationary relative to the stator (14) is formed.

8. An actuator according to any one of the preceding claims, **characterized in that** it comprises a bearing (38) for guiding the nut (26) in rotation relative to the stator (14), preferably an antifriction bearing, the guide bearing (38) preferably having a bearing track (36) formed on the nut (26), or at least one ring (40, 240) stationary relative to the stator and a rotating ring (136, 236) shrunk onto the nut (26).

9. An actuator according to any one of the preceding claims, **characterized in that** it further comprises a rotary thrust bearing (62) connected to the screw (30) by means of the mechanical connection (54, 64) .

10. An actuator according to claim 9, **characterized in that** the rotary thrust bearing (62) is radially movable relative to the reference axis (100) of the actuator.

11. An actuator according to claim 10, **characterized in that** the actuator comprises a self-centering spring (63) of the rotary thrust bearing (62) pressing the rotary thrust bearing (62) against a bearing face (56) perpendicular to the reference axis (100).

12. An actuator according to claim 11 and one of claims 4 to 6, **characterized in that** the self-centering spring (63) is radially supported on a flange (163).

13. An actuator according to claim 12 and claim 3, **characterized in that** the flange (163) is held by a conical ring interposed between the preload spring (64) and the flange (163).

14. An actuator according to any one of the preceding claims, **characterized in that** the nut (26) has a stop (247), preferably consisting of a stop segment (247), interfering with the path of the screw (30) and limiting an axial movement of the screw (30) in a retraction direction.
